# EUROPÄISCHE PATENTSCHRIFT

(11) **EP 1 029 003 B1**
(45) Veröffentlichungstag und Bekanntmachung des Hinweises auf die Patenterteilung: **12.06.2002**
(21) Anmeldenummer: 98956872.0
(22) Anmeldetag: 24.10.1998
(51) Int. Cl.: C09B 67/20, C09B 67/46, C09D 17/00

(54) **VERWENDUNG VON DIMERDIOLALKOXYLATEN ALS ADDITIVE ZUR HERSTELLUNG VON PIGMENTKONZENTRATEN**
USE OF DIMERDIOLALKOXYLATES AS ADDITIVES IN THE PRODUCTION OF PIGMENT CONCENTRATES
UTILISATION DE DIMERDIOLALCOXYLATES EN TANT QU'ADDITIFS POUR LA PREPARATION DE CONCENTRES DE PIGMENTS

(30) Priorität: 04.11.1997 DE 19748575
(43) Veröffentlichungstag der Anmeldung: 23.08.2000
(73) Patentinhaber: Cognis Deutschland GmbH & Co. KG, 40589 Düsseldorf (DE)
(72) Erfinder: HÖFER, Rainer, D-40477 Düsseldorf (DE); SCHULTE, Heinz-Günther, D-45481 Mülheim (DE); RATHS, Hans-Christian, D-40789 Monheim (DE); FROMMELIUS, Harald, D-40789 Monheim (DE); GOLLNICK, Stefan, D-41464 Neuss (DE); PEGELOW, Ulrich, D-40597 Düsseldorf (DE)
(86) Internationale Anmeldenummer: EP9806763
(87) Internationale Veröffentlichungsnummer: WO9923173

(56) Entgegenhaltungen:
- EP-A- 0 002 683
- EP-A- 0 585 571
- DE-A- 19 511 669
- FR-A- 2 160 507
- DATABASE WPI Section Ch, Week 9714 Derwent Publications Ltd., London, GB; Class A82, AN 97-149915 XP002095492 & JP 09 025443 A (SAKATA INKS CO LTD) , 28. Januar 1997
- CHEMICAL ABSTRACTS, vol. 104, no. 12, 24. März 1986 Columbus, Ohio, US; abstract no. 90588, XP002095491 & CS 217 250 A
- DATABASE WPI Section Ch, Week 9732 Derwent Publications Ltd., London, GB; Class A23, AN 97-347659 XP002095493 & JP 09 143416 A (SAKATA INKS CO LTD) , 3. Juni 1997

## Beschreibung

### Gebiet der Erfindung

Die Erfindung betrifft die Verwendung von Dimerdiolalkoxylaten als Additive zur Herstellung von Pigmentkonzentraten, insbesondere wäßrigen Pigmentkonzentraten. Die Erfindung betrifft weiterhin Pigmentkonzentrate, in Fachkreisen auch als Pigmentdispersionen oder Pigmentpasten bezeichnet, mit einem Gehalt an Pigmenten, Dimerdiolalkoxylaten und einem flüssigen Trägermedium. insbesondere Wasser.

### Stand der Technik

Pigmentkonzentrate werden hergestellt indem man Pigmente unter Zuhilfenahme von Schermaschinen in einem flüssigen Trägermedium aufschließt und so fein verteilt. daß das Pigment dauerhaft in Form der Primärteilchen vorliegt. Geeignete Schermaschinen sind dem Fachmann bekannt und beispielsweise in
- C. H. Hare, Protective Coatings - Fundamentals of Chemistry and Composition, Technology Publishing Comp., Pittburgh (1994)
unter besonderer Berücksichtigung amerikanischer Technologien beschrieben. Wegen der Bedeutung des Dispergierens für die Lack-, Farben- und Druckfarbenindustrie sind sowohl der Dispergiervorgang als auch die zur Stabilisierung der Primärteilchen geeigneten niedermolekularen und höhermolekularen Verbindungen ausführlich in der Fachliteratur beschrieben. Beispielhaft sei hier verwiesen auf:
- H. Kittel, Lehrbuch der Lacke und Beschichtungen, Bd. III, S. 239 ff, Verl. W. A. Colomb, Berlin, Oberschwandorf (1976)
- J. V. Robinson, R. N. Thompson, Dispersants, in Paper Coating Additives, Monograph No. 25, TAPPI, Atlanta 1963
- J. D. Schofield, Polymeric Dispersants, in Handbook of Coating Additives, L. J. Calbo (Ed.), Bd. 2, Marcel Dekker, New York, Basel, Hongkong (1992).

Aus dem bekannten Stand der Technik kann keine Lehre zur gezielten Auswahl von Additiven abgeleitet werden, die die Formulierung von Pigmentkonzentraten wirkungsvoll unterstützen, speziell wenn diese Pigmentkonzentrate die Herstellung emissionsarmer, oder gar emissionsfreier Farben und Druckfarben erlauben sollen, oder wenn sie frei sein sollen von ökologisch oder ökotoxikologisch bedenklichen Substanzen.

Eine besondere Schwierigkeit stellt die Formulierung wässriger Pigmentkonzentrate dar, insbesondere wenn diese ohne den Zusatz niedermolekularer Colöser wie Ethylenglykol oder Propylenglykol erfolgen soll. So sind, wie der Fachmann weiß, sogenannte Pigmentverteiler auf der Basis von Polyphosphaten oder Polyacrylaten zwar zum Inschwebehalten von Pigmenten und Füllstoffen neben den durch Emulgatoren oder Schutzkolloide stabilisierten Latexteilchen in Dispersionsfarben hervorragend geeignet, nicht jedoch zur Herstellung von Pigmentkonzentraten mit dem vorbeschriebenen Anforderungsprofil.

Die meisten Dispergiermittel, die in organischen Trägerölen unterschiedlicher Polarität hervorragend geeignet sind, versagen, wenn als kontinuierliche Phase für die Pigmentkonzentrate Wasser gewählt wird. Gut pigmentbenetzende tensidische Dispergiermittel wie Alkylphenolpolyglykolether - vergleiche etwa die Patentschrift **GB 861 223** - wiederum sind hinsichtlichtlich ihrer biologischen Abbaubarkeit in jüngerer Zeit in die ökologische Diskussion gerückt, und zwar sowohl in der Wasch- und Reinigungsmittel-Industrie, wo sie als Tenside in Deutschland bereits vollständig ersetzt sind, als auch in der EmulsionsPolymerisation, d. h. bei der Erzeugung von wässrigen Bindemitteln für Dispersionsfarben, vergleiche dazu:
- C. Baumann, D. Feustel, U. Held, R. Höfer, "Stabilisierungssysteme für die Herstellung von Polymer-Dispersionen", in: Welt der Farben, S. 15 ff, (2/1996)

Eine weitere Erschwerung hinsichtlich der Auswahl von Additiven für die Formulierung von Pigmentkonzentraten besteht darin, daß das Dispergieradditiv dergestalt ausgewählt sein muß, daß, weitgehend unabhängig vom Trägeröl. die Viskosität der kontinuierlichen Phase mit steigender Scherkraft abnimmt, d. h. strukturviskos und auf keinen Fall dilatant sein darf.

Bei der Formulierung der Pigmentkonzentrate muß weiterhin darauf geachtet werden, daß eine speziell ausgewogene Balance zwischen Wasserrückhaltevermögen und Hygroskopie eingestellt werden muß, dergestalt, daß die Eigentrocknung des Konzentrats stark verzögert ist. Angetrocknete Pigmentkonzentrate sollen leicht redispergierbar sein. Andererseits dürfen Wasserrückhaltevermögen und Hygroskopie nicht so hoch werden, daß der fertige Anstrich wasserempfindlich wird.

Auch andere Gebrauchseigenschaften der fertigen Farbe wie Gefrier-/Tau-Stabilität, Lagerstabilität, Scherstabilität dürfen ebensowenig negativ beeinflußt werden wie Eigenschaften des ausgehärteten Films, z. B. Klarheit, Glanz oder Resistenz gegen Weißanlaufen.

Eine weitere besondere Anforderung, die durch die erfindungsgemäß zu entwickelnden Pigmentkonzentrate erfüllt werden soll, besteht darin, daß Verträglichkeit gegeben sein muß mit einem breiten Spektrum an Bindemitteln, organischen und anorganischen Pigmenten, die ihrerseits meist dispergiert in sogenannten. Basislacken vorliegen, gleichzeitig aber auch sowohl mit Wasser als auch mit den unterschiedlichen in Anstrichfarben verwendeten Lösemitteln, sowie mit den in Silikatanstrichfarben verwendeten hochalkalischen Wassergläsern.

Ein hoher Prozentsatz flüssiger Anstrichfarben wird industriell hergestellt, indem das polymere Bindemittel in einer separaten Stufe hergestellt und dann mit den übrigen Bestandteilen zur fertigen Farbe abgemischt wird. Falls die Einfärbung bereits an dieser Stelle erfolgen soll, wird das Pigment in einer vorgeschalteten Stufe mit dem Bindemittel in einem Hochgeschwindigkeitsmischer oder einem Dissolver angerieben, dann wird auf Gebrauchskonzentration herunterverdünnt. In Zusammenhang mit dieser Erfindung besonders interessant sind Bautenfarben für den do-it-yourself Gebrauch und für den Fachwerker-Bereich, und zwar für Innenund Außenanstriche. Die Bindemittel für diese Farben werden hergestellt durch Emulsionspolymerisation in wässriger Phase. Die wässrige Phase enthält in der Praxis häufig flüchtige organische Lösemittel, sogenannte Koaleszenzmittel, die entweder bereits während der Polymerisation oder später zugesetzt werden und die Filmbildung durch Anlösen der Latexteilchen unterstützen, sowie den Verlauf fördern. Der Eigengeruch dieser Koaleszenzmittel, speziell des bekannten und verbreiteten Isobuttersäure - 2,2,4 - Trimethyl-3-hydroxypentylesters (Texanol®). kann in frisch gestrichenen Räumen noch über mehrere Tage wahrgenommen werden. Er wird jedoch in der modernen Gesellschaft als mehr und mehr belästigend empfunden. Es besteht deshalb ein Interesse daran, moderne Anstrichfarben völlig frei zu halten von solchen Koaleszenzmitteln und anderen flüchtigen Löse- oder Co-Lösemitteln und diese auch nicht über die Pigmentkonzentrate einzuschleppen.

Neben der Einfärbung von Anstrichfarben bei der Herstellung wird ein nennenswerter Prozentsatz erst unmittelbar vor der Verwendung eingefärbt, sei es um spezielle Farbtöne einzustellen, sei es um besonderen Kundenwünschen entgegenzukommen. In diesen Fällen wird ein industriell vorgefertigtes Pigmentkonzentrat einer weißen oder pastellfarbenen Stammfarbe zugemischt. Diese kundennahe Form der Farbeinstellung kann sowohl handwerklich als auch halbindustriell oder industriell erfolgen. Das Pigmentkonzentrat wird in diesen Fällen meist in einem Verhältnis 5 bis 200 ml pro 1 Stammfarbe zugemischt. Oft wird eine Kombination von zwei oder drei verschiedene Pigmentpasten benötigt, um den gewünschten Farbton zu treffen. Die Pigmentkonzentrate enthalten gewöhnlich hohe Pigmentkonzentrationen, d. h. die Pigmentvolumenkonzentration - abkürzend als PVK bezeichnet - liegt normalerweise zwischen 10 und 80 %.

Aus **DE-A-26 28 145** sind Ethylenoxid-Addukte an spezielle Glykole bekannt, die als Strukturelement eine Gruppe -C≡C- enthalten. Diese Verbindungen sollen sich als Anfeuchtemittel. Dispergiermittel, nichtionische Antischaummittel und Viskositätsstabilisatoren eignen und ihre Wirkung in wäßriger Lösung bei niedrigerer Konzentration als bei klassischen Tensiden entfalten. Über die Aufzählung der genannten Anwendungsbereiche hinaus offenbart jedoch die DE-A-26 28 145 keine konkreten weiteren Einzelheiten oder Ausführungsbeispiele.

**EP 565 709 B1** offenbart wäßrige inkjet-Tinten, die Polyol-Alkylenoxid-Kondensate als Cosolvens enthalten. Gemäß Seite 4, Zeilen 9-15 dieser Schrift enthält das Polyol insbesondere 3 oder mehr OH-Gruppen. Explizit werden dabei spezielle Triole wie Glycerin, Trimethylolpropan, Trimethylolethan, 1,2,4-Butantriol und 1,2,6-Hexantriol genannt, ferner als Tetrol Pentaerythritol und Di-(trimethylolpropan), als Pentol Glucose sowie als Hexol Sorbitol und Inositol. Der Einsatz von Diolen wird jedoch als wenig befriedigend dargestellt. In diesem Zusammenhang wird festgestellt, daß Alkylenoxid-Kondensate von Diolen im allgemeinen nicht mit Pigmentdispersionen kompatibel sind, wobei Neopentylglykolalkoxylate möglicherweise ausgenommen sind.

Aus **DE 195 11 669 A1** ist die Verwendung von Dimerdiolalkoxylaten als Verdickungsmittel für wäßrige oberflächenaktive Mittel bekannt, worunter Wasch-, Spül- und Reinigungsmittel sowie Mittel zur Haar- und Körperpflege verstanden werden.

**WO 96/7689** offenbart Copolymere der allgemeinen Formel (A-COO)₂-B, worin A ein Molgewicht von wenigstens 500 hat und der Rest einer öllöslichen komplexen Monocarbonsäure spezieller Struktur ist und B ein Molgewicht von wenigstens 500 hat und der divalente Rest eines Alkylglykols oder eines Polyalkylenglykols ist. Die Copolymeren gemäß WO 96/7689 sollen sich zum Dispergieren anorganischer Pigmente in organischen Medien eignen.

Aus **EP 735 109 A2** sind wäßrige Pigmentpräparationen bekannt, die unter anderem 10 bis 80% eines Pigments und 0,1 bis 20% eines Oxalkylierungsproduktes enthalten, dasdurch Anlagerung von gegebenenfalls substituierten Styrolen an gegebenenfalls substituierte Phenole und Umsetzung mit Ethylenoxid und/oder Propylenoxid erhalten wird.

Aus **DE 39 20 130 A1** ist die Verwendung von Partialestem von Oligoglycerinen mit Fettsäuren als Pigmentdispergatoren für wäßrige Lackdispersionen bekannt. Dabei können die genannten Partialester gegebenenfalls ethoxyliert und/oder propoxyliert sein.

Der vorliegenden Erfindung lag die Aufgabe zu Grunde, wirkungsvolle Additive zur Herstellung von Pigmentkonzentraten sowie die dadurch zugänglichen Pigmentkonzentrate selbst bereitzustellen, die die Vielzahl der oben genannten Kriterien hinsichtlich des wünschenswerten Eigenschaftsprofils solcher Zusätze beziehungsweise der Pigmentkonzentrate selbst erfüllen.

### Beschreibung der Erfindung

Gegenstand der Erfindung ist zunächst die Verwendung von Dimerdiolalkoxylaten als Additive zur Herstellung von Pigmentkonzentraten. Unter Dimerdiolalkoxylaten werden im Rahmen der vorliegenden Erfindung Anlagerungsprodukte von 1 bis 200 Mol Ethylenoxid und/oder Propylenoxid an Dimerdiole mit überwiegend 36 bis 44 C-Atomen verstanden.

Dimerdiole sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert:
- Fette & Öle 26 (1994), Seiten 47-51
- Speciality Chemicals 1984 (Mai-Heft), Seiten 17,18, 22-24

Die den erfindungsgemäß einzusetzenden Dimerdiolalkoxylaten zu Grunde liegenden Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden:
- Fat Sci. Technol. 95 (1993) Nr.3, Seiten 91 - 94

Im Rahmen der vorliegenden Erfindung sind diejenigen Dimerdiolalkoxylate bevorzugt, die sich von Dimerdiolen mit einem Dimergehalt von mindestens 50% und insbesondere 75% ableiten und bei denen die Zahl der C-Atome pro Dimermolekül überwiegend im Bereich von 36 bis 44 liegt. Ganz besonders bevorzugt sind dabei Dimerdiolethoxylate mit einem Gehalt von 1 bis 30 Mol Ethylenoxid pro Mol Dimerdiol.

In einer bevorzugten Ausführungsform bezieht sich die vorliegende Erfindung auf die Verwendung der Dimerdiolalkoxylaten als Additive zur Herstellung von wäßrigen Pigmentkonzentraten.

Die Menge der erfindungsgemäß einzusetzenden Dimerdiolalkoxylate richtet sich einerseits nach der Natur der zu dispergierenden Farbstoffe sowie nach der Menge der zu dispergierenden Farbstoffe. Vorzugsweise setzt man dabei die Dimerdiolalkoxylate in einer Menge von 0,1 bis 20 Gew.-% - bezogen auf die gesamte Pigmentdispersion - ein.

Die Herstellung der Dimerdiolalkoxylate kann nach allen dem Fachmann aus der Literatur bekannten Methoden erfolgen. In aller Regel wird man dabei das gewünschte Dimerdiol nach üblichen Methoden alkoxylieren. Die Standardmethode der Alkoxylierung besteht darin, daß man einen Alkohol - im Falle der vorliegenden Erfindung ein Dimerdiol - mit Ethylenoxid und/oder Propylenoxid in Kontakt bringt und dieses Gemisch in Gegenwart eines alkalischen Katalysators und Temperaturen im Bereich von 20 bis 200 °C umsetzt. Auf diese Weise werden Anlagerungsprodukte von Ethylenoxid (EO) und/oder Propylenoxid (PO) an das jeweils eingesetzte Dimerdiol erhalten. Bei den Additionsprodukten handelt es sich mithin um EO-Addukte oder um PO-Addukte oder um EO/PO-Addukte an das jeweils eingesetzte Dimerdiol; bei den EO/PO-Addukten kann dabei die Anlagerung von EO und PO statistisch oder blockweise erfolgen.

Ein weiterer Gegenstand der vorliegenden Erfindung sind Pigmentkonzentrate enthaltend
a) 10 bis 80 Gew.-% eines oder mehrerer Pigmente
b) 0,1 bis 20 Gew.-% eines oder mehrere Dimerdiolalkoxylate auf Basis von Dimerdiolen mit überwiegend 36 bis 44 C-Atomen, wobei diese Verbindungen 1 bis 200 Mol Ethylenoxid und/oder Propylenoxid pro Mol Dimerdiol enthalten, und
c) 15 bis 85 Gew.% eines flüssigen Trägermediums.

Die in den erfindungsgemäßen Pigmentkonzentraten enthaltenen Dimerdiolalkoxylate sind stickstofffrei und frei von hydrolysierbaren Ester- oder AldehydGruppen, was für den hier in Rede stehenden Anwendungsbereich von besonderem Vorteil ist.

Hinsichtlich der Auswahl der **Pigmente a)** bestehen im Rahmen der vorliegenden Erfindung an sich keinerlei Beschränkungen. Wie dem Fachmann bekannt handelt es sich bei Pigmenten um in Lösungsmitteln oder Bindemitteln praktisch unlösliche teilchenförmige organische oder anorganische Stoffe, die entweder selbst farbgebend oder mattierend sein können. Viele anorganische Pigmente fungieren auch als Füllstoffe und umgekehrt. Beispiele für besonders verbreitete Klassen von Pigmenten können der einschlägigen Fachliteratur entnommen werden, etwa:
- Otto-Albrecht Neumüller, Römpps Chemie-Lexikon, 7. Auflage, Stuttgart 1974, Seiten 2693-2695

Als **Dimerdioalkoxylate b)** enthalten die erfindungsgemäßen Pigmentkonzentrate vorzugsweise solche Verbindungen, die 1 bis 30 Mol Ethylenoxid und/oder Propylenoxid pro Mol Dimerdiol enthalten.

Flüsssige **Trägermedien c) -** etwa organische Trägeröle oder Wasser - sind dem Fachmann bekannt. In einer bevorzugten Ausführungsform wählt man als flüssiges Trägermedium Wasser. In diesem Falle handelt es sich also um wäßrige Pigmentkonzentrate.

In einer weiteren Ausführungsform enthalten die erfindungsgemäßen Pigmentkonzentrate neben den obligatorischen Bestandteilen a), b) und c) zusätzlich 0,1 bis 30 Gew.-% eines oder mehrerer **Tenside d)** aus der Gruppe der Alkylpolyglycoside (wie unten näher beschrieben), Fettalkoholpolyglykolether (wie unten näher beschrieben) und Styrylphenolpolyglykolether (wie etwa aus der oben genannten EP-A-735 109 bekannt).

Alkylpolyglycoside lassen sich durch die allgemeine Struktur (IV) charakterisieren:

R-(G)ₚ (IV)

Darin bedeuten R einen linearen, gesättigten Alkylrest mit 8 bis 22 C-Atomen und (G)_{P} ein Glycosid- oder Oligoglycosid-Rest mit einem Oligomerisationsgrad x von 1 bis 10 ist, zum Deinken von Altpapier. Alkylglycoside der angegebenen Formel (IV) sind seit langem bekannte oberflächenaktive Stoffe, die aus Zuckern und aliphatischen, primären Alkoholen mit 8 bis 22 C-Atomen unter Acetalisierung herstellbar sind. Als Zuckerkomponente (Glycosen) kommen bevorzugt Glucose, daneben aber auch Fructose, Mannose, Galactose, Telose, Gulose, Allose, Altrose, Idose, Arabinose, Xylose, Lyxose, Libose und Gemische davon in Frage. Bevorzugt wegen der leichten Zugänglichkeit und der guten Anwendungseigenschaften sind die Acetalisierungsprodukte der Glucose mit Fettalkoholen, die beispielsweise aus natürlichen Fetten und Ölen nach bekannten Verfahren erhältlich sind. insbesondere mit linearen, primären, gesättigten und ungesättigten Fettalkoholen mit 8 bis 22 C-Atomen. Bezüglich des Glycosidrestes (G)ₚ gilt, daß sowohl Monoglycoside (p = 1), bei denen ein Zuckerrest glycosidisch mit dem Fettalkohol verbunden ist, als auch oligomere Glycoside mit einem Oligomerisationsgrad p = 2 bis 10 geeignet sind. In der Regel liegen Gemische von Mono- und Oligoglycosiden vor. Bevorzugt geeignet sind solche Alkylglycoside (IV). in welcher R eine Alkylgruppe mit 8 bis 22 C-Atomen und (G)ₚ ein Glycosid- oder Oligoglycosidrest mit einem Oligomerisationsgrad p = 1 bis 10 ist. Ganz besonders bevorzugt ist R dabei eine Alkylgruppe mit 8 bis 14 C-Atomen. Der mittlere Oligomerisationsgrad liegt vorzugsweise im Bereich von 1 bis 1,5.

Fettalkoholpolyglykolether lassen sich durch die allgemeine Formel (V) charakterisieren:

R⁹-O-(CH₂- CHR¹⁰-O)_{q}H (V)

Darin bedeuten R⁹ einen linearen, gesättigten Alkylrest mit 8 bis 22 C-Atomen, der Rest R¹⁰ Wasserstoff oder eine Methylgruppe und der Index q eine Zahl im Bereich von 1 bis 50. Aus der Gruppe der Verbindungen (V) sind Fettalkoholethoxylate besonders bevorzugt, insbesondere Anlagerungsprodukte von 2 bis 20 Mol Ethylenoxid pro Mol Fettalkohol mit 12 bis 18 C-Atomen.

In einer weiteren Ausführungsform enthalten die erfindungsgemäßen Pigmentkonzentrate neben den obligatorischen Bestandteilen a), b) und c) zusätzlich 0,1 bis 30 Gew.-% eines oder mehrerer **Co-Additive e)** aus der Gruppe der Polyethylenglykole und der Polyglykolether (erhältlich durch Ethoxylierung von 1,2- oder 1,3-Propandiol, 1,2- oder 1,4-Butandiol, Hexandiol, Glycerin, Trimethylolpropan oder Pentaerythrit), wobei diese Verbindungen ein Molekulargewicht im Bereich von 200 bis 1000, vorzugsweise 200 bis 600 aufweisen sollen.

Die erfindungsgemäßen Pigmentkonzentrate können neben den genannten obligatorischen Bestandteilen a), b) und c) zusätzlich weitere in Pigmentkonzentraten übliche Ingredienzien enthalten. Beispiele hierfür sind Entschäumer, Konservierungsmittel, Antrocknungsverzögerer und Antiabsetzmittel.

Die erfindungsgemäßen Pigmentkonzentrate eignen sich zum Einfärben von Anstrichfarben, z. B. durch den Heimwerker oder durch den Fachmann in Farbenbanken, oder auch beim Erzeuger der Anstrichfarben. Die erfindungsgemäßen Pigmentkonzentrate können jedoch ebenfalls eingesetzt werden zur Einfärbung anderer Anstriche oder Beschichtungen, wie Druckfarben, Lederzurichtungen, Tapetenfarben, Holzlasuren, Holzschutzsystemen und Holzbeizen, Überdrucklacken oder luft- oder ofentrocknenden Industrielacken, sowie zum Pigmentieren von Buntstiftminen, Faserschreibern, Ink-Jet-Tinten, Tuschen. Pasten für Kugelschreiber, Schuhpflegemittel, non-woven-Vliesen, Papierstreichfarben und Papiermasseeinfärbungen, Kartonage-Druckfarben, Spinnfärbungen und Folien.

Die folgenden Beispiele dienen der Erläuterung der Erfindung und sind nicht einschränkend zu verstehen.

### Beispiele

### 1. Verwendete Substanzen

### 1.1. Pigmente

- PR 101:: Pigment mit Colour-Index PR (pigment red) 101; eingesetzt wurde hierzu "Bayferrox 120 M" (Fa. Bayer)
- PV 19:: Pigment mit Colour-Index PV (pigment violet) 19; eingesetzt wurde hierzu "Hostaperm rotviolett ER 02" (Fa. Hoechst AG)
- PG 7:: Pigment mit Colour-Index PG (pigment green) 7: eingesetzt wurde hierzu "Sunfast grün 7 264-0414" (Fa. Sun Chemicals)
- PBk 7:: Pigment mit Colour-Index PR (pigment black) 7; eingesetzt wurde hierzu "Spezialschwarz 4" (Fa. Degussa)

### 1.2. Antiabsetzmittel

Xanthan-Gum "Deuteron VT 819" (Wilhelm O.C. Schöner GmbH, Achim)

### 1.3. Entschäumer

Silikonentschäumer "Dehydran 3282" (Henkel KgaA, Düsseldorf)

### 1.4. Erfindungsgemäße Additive

- Add-1:: Anlagerungsprodukt von !0 Mol Ethylenoxid an 1 Mol eines Dimerdiols mit 36-44 C-Atomen.

### 1.5. Weiße Dispersionsfarben bzw. -lacke

- Disp-1:: Dispersionsfarbe auf Basis Vinylacetat-Ethylen-Copolymer ("Vinnapast EZ 36", Wacker Chemie)
- Disp-2:: Dispersionsfarbe auf Basis Styrolacrylat ("Acronal 290D", BASF)
- Disp-3:: Dispersionslack auf Basis Reinacrylat ("Neocryl XK90", Zeneca Resins /NL)

### 2. Herstellung der Pigmentpasten (Pigmentkonzentrate)

### 2.1. Beispiel B-1

33,4 Gewichtsteile Wasser wurden vorgelegt, unter Rühren 6,0 Gewichtsteile des Additivs Add-1 zugegeben und diese Mischung homogenisiert. Anschließend gab man 60 Gewichtsteile des Pigments PR 101 zu und homogenisierte mittels eines Dissolvers (Dispermat CV, Fa. Getzmann, Reinhardshagen). Zu dem auf diese Weise erhaltenen Premix fügte man vorsichtig Dimethylethanolamin zu und zwar in einer Menge, daß ein pH-Wert von 8 resultierte. Anschließend gab man 0,4 Gewichtsteile des unter Nr. 1.3. genannten Entschäumers und 0,2 Gewichtsteile des unter Nr. 1.2. genannten Antiabsetzmittels hinzu und dispergierte unter Verwendung einer Rührwerkskugelmühle im Umlaufverfahren (Dispermat SL. Fa. Getzmann. Reinhardshagen) 30 Minuten bei einer Drehzahl von 2000 Umdrehungen pro Minute.

### 2.2. Beispiel B-2

54.6 Gewichtsteile Wasser wurden vorgelegt, unter Rühren 15 Gewichtsteile des Additivs Add-1 zugegeben und diese Mischung homogenisiert. Anschließend gab man 30 Gewichtsteile des Pigments PV 19 zu und homogenisierte mittels eines Dissolvers (Dispermat CV, Fa. Getzmann, Reinhardshagen). Zu dem auf diese Weise erhaltenen Premix fügte man vorsichtig Dimethylethanolamin zu und zwar in einer Menge, daß ein pH-Wert von 8 resultierte. Anschließend gab man 0,4 Gewichtsteile des unter Nr. 1.3. genannten Entschäumers hinzu und dispergierte unter Verwendung einer Rührwerkskugelmühle im Umlaufverfahren (Dispermat SL, Fa. Getzmann, Reinhardshagen) 60 Minuten bei einer Drehzahl von 3500 Umdrehungen pro Minute.

### 2.3. Beispiel B-3

48,6 Gewichtsteile Wasser wurden vorgelegt, unter Rühren 11 Gewichtsteile des Additivs Add-1 zugegeben und diese Mischung homogenisiert. Anschließend gab man 40 Gewichtsteile des Pigments PG 7 zu und homogenisierte mittels eines Dissolvers (Dispermat CV, Fa. Getzmann, Reinhardshagen). Zu dem auf diese Weise erhaltenen Premix fügte man vorsichtig Dimethylethanolamin zu und zwar in einer Menge, daß ein pH-Wert von 8 resultierte. Anschließend gab man 0.4 Gewichtsteile des unter Nr. 1.3. genannten Entschäumers hinzu und dispergierte unter Verwendung einer Rührwerkskugelmühle im Umlaufverfahren (Dispermat SL, Fa. Getzmann, Reinhardshagen) 60 Minuten bei einer Drehzahl von 4000 Umdrehungen pro Minute.

### 2.4. Beispiel B-4

58.6 Gewichtsteile Wasser wurden vorgelegt, unter Rühren 16 Gewichtsteile des Additivs Add-1 zugegeben und diese Mischung homogenisiert. Anschließend gab man 25 Gewichtsteile des Pigments PBk 7 zu und homogenisierte mittels eines Dissolvers (Dispermat CV, Fa. Getzmann, Reinhardshagen). Zu dem auf diese Weise erhaltenen Premix fügte man vorsichtig Dimethylethanolamin zu und zwar in einer Menge, daß ein pH-Wert von 8 resultierte. Anschließend gab man 0,4 Gewichtsteile des unter Nr. 1.3. genannten Entschäumers hinzu und dispergierte unter Verwendung einer Rührwerkskugelmühle im Umlaufverfahren (Dispermat SL. Fa. Getzmann, Reinhardshagen) 90 Minuten bei einer Drehzahl von 4000 Umdrehungen pro Minute.

### 3. Anwendungstechnische Untersuchungen

Die gemäß 2.1 bis 2.4. (Beispiele B-1 bis B-4) erhaltenen Pigmentpasten wurden auf ihr Viskositätsverhalten und auf ihre Verträglichkeit mit weißen Dispersionsfarben bzw. -lacken geprüft. Die Ergebnisse können den Tabellen 1 bis 3 entnommen werden.

### 3.1. Viskositätsverhalten

Die Viskositäten der Pigmentpasten gemäß den Beispielen B-1 bis B-4 wurden
a) nach 24-stündiger Lagerung bei 20 °C und
b) nach 4-wöchiger Lagerung bei 40 °C
bei Raumtemperatur nach Brookfield gemessen (LVT. 30 Umdrehungen pro Minute, Spindel 2-4, nach 1 Minute Rührzeit); die Angaben der Tabelle 1 sind in mPas.

**Tabelle 1:**

| **Viskositätsverhalten** | | | | |
|---|---|---|---|---|
| | B-1 | B-2 | B-3 | B-4 |
| Viskosität nach 24 Stunden | 800 | 4200 | 300 | 150 |
| Viskosität nach 4 Wochen | 900 | 4400 | 310 | 180 |

### 3.2. Rubout

Zur Bestimmung des Rubouts wurden die weißen Dispersionsfarben bzw. -lacke Disp-1 bis Disp-3 jeweils mit 10 Gew.-% - bezogen auf die eingesetzte weiße Dispersionsfarbe bzw. den eingesetzten Dispersionslack - der Pigmentpasten gemäß den Beispielen B-1 bis B-4 versetzt und homogen durchmischt. Die erhaltenen Rezepturen wurden dann
a) sofort danach und
b) nach 4-wöchiger Lagerung bei 40 °C
auf Kontrast-Papierkarten (Fa. Erichson, Typ "7.32/7") in dünner Schicht (150 Mikrometer Naßschichtdicke) aufgebracht Nach etwa drei Minuten wurde die aufgebrachte Mischung im unteren Drittel der Prüfkarte mit dem Finger verrieben und dann die Farbtöne der unverriebenen Fläche mit dem Farbton der verriebenen Fläche verglichen (mit Dr. Lange MicroColor nach CIELAB, Lichtart D65. 10°). Die dabei resultierenden ΔE-Werte sind in den Tabellen 2a (direkt eingesetzte Rezepturen) und 2b (4 Wochen gelagerte Rezepturen) angegeben. Wie der Fachmann weiß, sind auf dem hier in Rede stehenden technischen Fachgebiet ΔE-Werte im Bereich von 0,3 bis 0,5 als sehr gut zu bezeichnen, ΔE-Werte im Bereich von 0.5 bis etwa 1,0 als gut und ΔE-Werte oberhalb von 1,0 als inakzeptabel.

**Tabelle 2a:**

| **Rubout bei direktem Einsatz der Rezepturen** | | | | |
|---|---|---|---|---|
| | B-1 | B-2 | B-3 | B-4 |
| Disp-1 | 0,4 | 0,4 | 0,4 | 0,6 |
| Disp-2 | 0,5 | 0,5 | 0,6 | 0,3 |
| Disp-3 | 0,4 | 0,3 | 0,4 | 0,4 |

**Tabelle 2b:**

| **Rubout bei 4-wöchiger Lagerung der Rezepturen** | | | | |
|---|---|---|---|---|
| | B-1 | B-2 | B-3 | B-4 |
| Disp-1 | 0,5 | 0,4 | 0,6 | 0,6 |
| Disp-2 | 0,4 | 0,5 | 0,5 | 0,4 |
| Disp-3 | 0,5 | 0,4 | 0,4 | 0,5 |

### 3.3. Glanzgrad

Zur Bestimmung des Glanzgrades wurden die weißen Dispersionsfarben bzw. - lacke Disp-1 bis Disp-3 jeweils mit 10 Gew.-% - bezogen auf die eingesetzte weiße Dispersionsfarbe bzw. den eingesetzten Dispersionslack - der Pigmentpasten gemäß den Beispielen B-1 bis B-4 versetzt und homogen durchmischt. Die erhaltenen Rezepturen wurden dann
a) sofort danach und
b) nach 4-wöchiger Lagerung bei 40 °C
auf Kontrast-Papierkarten (Fa. Erichson, Typ "7.32/7") in dünner Schicht (150 Mikrometer Naßschichtdicke) aufgebracht. Nach erfolgter Trocknung wurde der Glanzgrad mittels eines Glanzgradmeßgerätes nach Dr. Lange bei Winkeln von 85° bzw. 60° bestimmt. Die Ergebnisse sind in den Tabellen 3a (direkt eingesetzte Rezepturen) und 3b (4 Wochen gelagerte Rezepturen) angegeben.
Zum Vergleich wurden auch der Glanzgrad der weißen Dispersionsfarben bzw. - lacke. also der unveränderten, nicht mit den erfindungsgemäßen Pigmentpasten B-1 bis B-4 abgetönten Polymerdispersionen Disp-1 bis Disp-3 bestimmt. Diese Referenzwerte sind zu Vergleichszwecken in den Tabellen 3a und 3b in der Spalte "Referenz" eingetragen.

**Tabelle 3a:**

| **Glanzgrad bei direktem Einsatz der Rezepturen** | | | | | | |
|---|---|---|---|---|---|---|
| | Meßwinkel | **Referenz** | B-1 | B-2 | B-3 | B-4 |
| Disp-1 | 85° | **3** | 3 | 3 | 3 | 3 |
| Disp-2 | 85° | **5** | 5 | 5 | 5 | 5 |
| Disp-3 | 60° | **44** | 44 | 46 | 46 | 44 |

**Tabelle 3b:**

| **Glanzgrad bei 4-wöchiger Lagerung der Rezepturen** | | | | | | |
|---|---|---|---|---|---|---|
| | Meßwinkel | **Referenz** | B-1 | B-2 | B-3 | B-4 |
| Disp-1 | 85° | **3** | 3 | 3 | 3 | 3 |
| Disp-2 | 85° | **5** | 5 | 5 | 5 | 5 |
| Disp-3 | 60° | **45** | 46 | 46 | 47 | 45 |

## Patentansprüche

1. Verwendung von Diolalkoxylaten als Additive zur Herstellung von Pigmentkonzentraten, **dadurch gekennzeichnet, daß** es sich bei den Diolalkoxylaten um Dimerdiolalkoxylate auf Basis von Dimerdiolen mit überwiegend 36 bis 44 C-Atomen handelt, wobei diese Verbindungen 1 bis 200 Mol Ethylenoxid und/oder Propylenoxid pro Mol Dimerdiol enthalten.

2. Verwendung nach Anspruch 1, wobei man die Dimerdiolalkoxylate in einer Menge von 0,1 bis 20 Gew.-% - bezogen auf das gesamte Pigmentkonzentrat - einsetzt.

3. Pigmentkonzentrate enthaltend - bezogen auf das gesamte Konzentrat -
a) 10 bis 80 Gew.-% eines oder mehrerer Pigmente
b) 0.1 bis 20 Gew.-% eines oder mehrerer Dimerdiolalkoxylate auf Basis von Dimerdiolen mit überwiegend 36 bis 44 C-Atomen, wobei diese Verbindungen 1 bis 200 Mol Ethylenoxid und/oder Propylenoxid pro Mol Dimerdiol enthalten, und
c) 15 bis 85 Gew.% eines flüssigen Trägermediums.

4. Pigmentkonzentrate nach Anspruch 3, wobei das flüssige Trägermedium Wasser ist.

5. Pigmentkonzentrate nach Anspruch 3 oder 4, wobei diese Konzentrate neben den obligatorischen Bestandteilen a), b) und c) zusätzlich 0,1 bis 30 Gew.-% eines oder mehrerer **Tenside d)** aus der Gruppe der Alkylpolyglycoside, Fettalkoholpolyglykolether und der Styrylphenolpolyglykolether enthalten.

6. Pigmentkonzentrate nach einem der Ansprüche 3 bis 5, wobei diese Konzentrate neben den obligatorischen Bestandteilen a), b) und c) zusätzlich 0,1 bis 30 Gew.-% eines oder mehrerer **Co-Additive e)** aus der Gruppe der Polyethylenglykole und der Polyglykolether (erhältlich durch Ethoxylierung von 1,2- oder 1,3-Propandiol, 1,2- oder 1,4-Butandiol, Hexandiol, Glycerin, Trimethylolpropan oder Pentaerythrit) enthalten, wobei diese Verbindungen ein Molekulargewicht im Bereich von 200 bis 1000 aufweisen.

## Claims

1. The use of diol alkoxylates as additives for the production of pigment concentrates, **characterized in that** the diol alkoxylates are dimerdiol alkoxylates based on dimerdiols predominantly containing 36 to 44 carbon atoms, these compounds containing 1 to 200 moles ethylene oxide and/or propylene oxide per mole dimerdiol.

2. The use claimed in claim 1, **characterized in that** the dimerdiol alkoxylates are used in a quantity of 0.1 to 20% by weight, based on the pigment concentrate as a whole.

3. Pigment concentrates containing - based on the concentrate as a whole -
a) 10 to 80% by weight of one or more pigments,
b) 0.1 to 20% by weight of one or more dimerdiol alkoxylates based on dimerdiols predominantly containing 36 to 44 carbon atoms, these compounds containing 1 to 200 moles ethylene oxide and/or propylene oxide per mole dimerdiol, and
c) 15 to 85% by weight of a liquid carrier medium.

4. Pigment concentrates as claimed in claim 3, **characterized in that** the liquid carrier medium is water.

5. Pigment concentrates as claimed in claim 3 or 4, **characterized in that**, besides the compulsory components a), b) and c), they additionally contain 0.1 to 30% by weight of one or more **surfactants d)** from the group of alkyl polyglycosides, fatty alcohol polyglycol ethers and styryl phenol polyglycol ethers.

6. Pigment concentrates as claimed in any of claims 3 to 5, **characterized in that**, besides the compulsory components a), b) and c), they additionally contain 0.1 to 30% by weight of one or more **co-additives e)** from the group of polyethylene glycols and polyglycol ethers (obtainable by ethoxylation of 1,2- or 1,3-propanediol, 1,2- or 1,4-butanediol, hexanediol, glycerol, trimethylol propane or pentaerythritol), these compounds having a molecular weight of 200 to 1000.

## Revendications

1. Utilisation d'alcoxylates de diols comme additifs pour la préparation de concentrés de pigments,
**caractérisée en ce que**,
pour ce qui est des alcoxylates de diols, il s'agit d'alcoxylates de diols dimères à base de diols dimères comportant principalement 36 à 44 atomes de carbone, ces composés contenant de 1 à 200 moles d'oxyde d'éthylène et/ou d'oxyde de propylène par mole de diol dimère.

2. Utilisation selon la revendication 1, dans laquelle on utilise les alcoxylates de diols dimères en une quantité de 0,1 à 20 % en poids - par rapport à l'ensemble du concentré de pigments.

3. Concentrés de pigments contenant - par rapport à l'ensemble du concentré -
a) de 10 à 80 % en poids d'un ou plusieurs pigments
b) de 0,1 à 20 % en poids d'un ou plusieurs alcoxylates de diols dimères à base de diols dimères comportant principalement de 36 à 44 atomes de carbone, ces composés contenant de 1 à 200 moles d'oxyde d'éthylène et/ou d'oxyde de propylène par mole de diol dimère et
c) de 15 à 85 % en poids d'un support liquide.

4. Concentrés de pigments selon la revendication 3, dans lesquels le milieu support liquide est l'eau.

5. Concentrés de pigments selon la revendication 3 ou 4, dans lesquels ces concentrés contiennent de manière additionnelle, outre les constituants a), b) et c) obligatoires, de 0,1 à 30 % en poids d'un ou plusieurs **agents tensioactifs d)** du groupe des alkylpolyglygosides, polyglycol éthers d'alcools gras et polyglycol éthers de stéryl phénol.

6. Concentrés de pigments selon l'une des revendications 3 à 5, ces concentrés contenant en outre, outre les constituants a), b) et c) obligatoires, de 0,1 à 30% en poids d'un ou plusieurs coadditifs e) du groupe des polyéthylènes glycols et des éthers de polyglycol (que l'on peut obtenir par éthoxylation de 1,2 ou de 1,3-propane diol, de 1,2- ou de 1,4-butane diol, d'hexane diol, de glycérine, de triméthylol propane ou de pentaérythritol), ces composés présentant un poids moléculaire compris entre 200 et 1000.
